# EUROPEAN PATENT APPLICATION

(11) **EP 4 524 809 A1**
(43) Date of publication of application: **19.03.2025**
(21) Application number: 23197088.0
(22) Date of filing: 13.09.2023
(51) Int. Cl.: G06F 40/30, G05B 19/418, G06F 8/10, G06F 8/20, G06F 40/55, G06N 20/00

(54) **DEVICE AND METHOD FOR FORMALIZING AN UNCONTROLLED DATA FORMAT INPUT**

(71) Applicant: ABB SCHWEIZ AG, 5400 Baden (CH)
(72) Inventor: SCHOCH, Nicolai, 69120 Heidelberg (DE); HOERNICKE, Mario, 76829 Landau (DE)
(74) Representative: Maiwald GmbH

(57) **Abstract**

A computer-implemented method for formalizing an uncontrolled data format input, comprising the steps:
obtaining (S10), by an input interface, an uncontrolled data format input;
determining (S20), by an input processing algorithm, an embedding (E) of the obtained uncontrolled data format input in an embedding space (30) resulting from a plurality of preprocessed embeddings, wherein the embedding (E) is represented by an embedding vector, wherein the embedding vector comprises a plurality of vector entries specifying the embedding (E);
formalizing (S30), by an output processing algorithm, a controlled data format output using the embedding (E);
outputting (S40), by an output interface, the controlled data format output.

## Description

### Field of the invention

The present disclosure relates to a computer-implemented method and a device for formalizing an uncontrolled data format input.

### Background

Today, uncontrolled engineering intentions, as an example for engineering- and operations-relevant content, is manually translated, or in other words converted into controlled representations, e.g., into ontological engineering intention model representations, in order for thereon-based further processing, e.g., in the context of Process Automation tool workflows.

Still, there is exclusively manual effort needed of a knowing Process and Automation Engineering domain expert and ontology expert for producing the ontological engineering intent representations or in other ways to formalize an uncontrolled data format input into a controlled data format output that can be further processed. Still, this is very error-prone, even for an expert.

Thus, there is the need for an improved way of formalizing such uncontrolled data format input like engineering intentions.

### Summary

The present invention is defined by the subject-matter of the independent claims. Additional features of the invention are presented in the dependent claims.

According to an aspect of the invention, a computer-implemented method for formalizing an uncontrolled data format input comprises the following steps. Obtaining, by an input interface, an uncontrolled data format input. Determining, by an input processing algorithm an embedding of the obtained uncontrolled data format input in an embedding space resulting from a plurality of preprocessed embeddings, wherein the embedding is represented by an embedding vector, wherein the embedding vector comprises a plurality of vector entries specifying the embedding. Formalizing, by an output processing algorithm, a controlled data format output using the (above-determined) embedding. Outputting, by an output interface, the controlled data format output.

The term "formalizing", as used herein, describes a transformation or translation of the uncontrolled data format input, in particular in form of an embedding vector, into controlled data format output. For example, formalizing comprises translating the embedding vector of engineering intention into an ontological representation that can be further processed in the engineering workflow.

The term "controlled data format" as used herein comprises any of, but not exclusively: RDF, OWL, XML, JSON, AutomationML, modular type package, MTP, different relational database formats.

The term "embedding", as used herein, in other words is an abstract representation, in particular a latent semantic representation, of an input. Further preferably, the embedding is a vectorial representation, referred to as embedding vector, of an input. For example, the embedding is a meaningful vectorial representation of words, sentences and/or formulations about engineering intentions. The embeddings are preferably obtained or learned by a natural language processing technique or from a language model.

Preferably, the controlled data format output comprises a data format, a schema or an ontology. The controlled data format output is a known target format that can be automatically further processed, in particular by other tools in an engineering workflow. In other words, the method allows formalizing a controlled data format output in ways representing the content of the uncontrolled data format input. Furthermore, the uncontrolled data format input can also comprise information that is represented in controlled data formats, but that are provided as uncontrolled input, for example the nicely-formatted and structured content of a JSON file but provided as plain text.

Preferably, the input processing algorithm comprises a neural network, referred to as an input layer.

Preferably, the output processing algorithm comprises a neural network, referred to as output layer.

Preferably, the embedding space is either (a) a pre-trained, state-of-the-art, open-source embedding obtained by means of a natural language processing algorithm, e.g., a large language model (LLM), or (b) a proprietarily trained embedding, obtained using domain-specific input and a standard NLP algorithm, or (c) either (a) or (b) plus a collection of preprocessed domain-specific concepts/terms/inputs, represented in their abstract / latent semantic representation that have already been determined by the input processing algorithm. In particular, these preprocessed embeddings in the embedding space may represent controlled/structured (e.g., ontological) representations of engineering or operations content. Furthermore, for example, these preprocessed embeddings in this embedding space can be stored in a database of embeddings.

Preferably, specifying the embedding (i.e., assigning it an n-dimensional vector (i.e., sort of a location) in the embedding space) can also be referred to as classifying the input (into the "region"/"bubble" of/around the "location").

Preferably, the vector is represented as a normalized vector.

Preferably, a transformer model, further preferably comprising encoder model and decoder model, is provided. The determination of the embedding of the obtained uncontrolled data format input by the input processing algorithm corresponds to the encoder model. The abstract / latent semantic embedding representation is then used as an input for the decoder model to determine the controlled data format output.

Thus, the method provides a pipeline of analyzing, classifying/computing and formalizing an uncontrolled data format input (like engineering or operations content) via an abstract / latent semantic representation (embedding) to a controlled data format output (like an ontological representation of the engineering or operations content) that can in particularly be used further in the engineering workflow.

Thus, an improved and automated way of formalizing an uncontrolled data format input is provided.

In a preferred embodiment, the uncontrolled data format input comprises engineering or operations related content.

Preferably, the engineering or operations related content comprises any one of engineering intentions, process engineering specifications, automation engineering specifications, engineering recipes, and operational specifications.

In other words, the engineering or operations related content comprises any engineering knowledge during the entire "life cycle" of the engineering workflow. This for example starts from process engineering (e.g. chemical engineering), via automation engineering (e.g. automation- and control engineering), up to operations (i.e., when the plant is set up and in operation). In other words, engineering or operations related content comprises content that is relevant to the both the engineering phase and/or operational phase of an industrial process plant.

For example, the operational specifications comprise starting and/or stopping a service, or changing a recipe for a product.

Thus, engineering or operations related content can be formalized into a controlled data format output that can be used further in engineering workflows. Furthermore, the engineering or operations content is provided in a format that can be processed and understood by any particular stakeholder in the engineering process. Thus, an information gap between the stakeholders, for example the automation engineers and the process engineers can be closed.

Thus, an improved and automated way of formalizing an uncontrolled data format input in form of engineering or operations content is provided.

In a preferred embodiment, determining, by the input processing algorithm, the embedding of the obtained uncontrolled data format input comprises identifying the engineering or operations content in the uncontrolled data format input and determining the embedding based on the identified engineering or operations content.

Preferably, the engineering or operations content extracted from the uncontrolled data format input by a machine learning model. For example, if the engineering or operations content is contained in a natural language input or an uncontrolled text input, a natural language processing technique is used to identify the engineering or operations content from the uncontrolled data format input. The engineering or operations content is then used to determine values of a respective embedding vector representing the engineering or operations content.

Thus, an improved way of formalizing an uncontrolled data format input in form of engineering or operations content is provided.

In a preferred embodiment, the uncontrolled data format input comprises a natural language input or an uncontrolled text input.

In other words, the uncontrolled data format input comprises uncontrolled input in form of text and/or speech.

For example, the method transforms engineering or operations content, preferably natural language engineering intentions, to a formalized ontological engineering intention representation.

Furthermore, the uncontrolled data format input can also comprise information that is represented in controlled data formats, but that are provided as uncontrolled input, for example the nicely-formatted and structured content of a JSON file but provided as plain text.

For example, the text contains also tables with numbers or other signs besides letters.

Thus, the uncontrolled data format input in form of a text can comprise both text as in a poem or control narrative, but also unstructured text with numbers, variables, tables, etc. (i.e., anything that is not images/audio/video).

Thus, an improved and automated way of formalizing an uncontrolled data format input in form of engineering or operations content is provided.

In a preferred embodiment, determining, by the input processing algorithm, the embedding of the obtained uncontrolled data format input comprises identifying preprocessed embeddings in the embedding space, which are similar to the embedding with respect to a predetermined metric, and determining the embedding based on the similar preprocessed embeddings.

Preferably, the metric comprises a "cosine similarity" or other common NLP-relevant metrics, which capture the semantic similarity/closeness of natural language building blocks / structures / terms.

In other words, the determining the embedding comprises analysing the obtained uncontrolled data format input to find the most-similar embedding among the preprocessed embedding.

For example, the embedding is determined, and then analyzed with respect to its location in the overall embedding space, e.g., in particular with respect to what other preprocessed embedding vectors are closest.

Preferably, the predetermined metric is preselected from a pool of predetermined metrics.

Preferably, the preprocessed embeddings represent controlled/structured (e.g., ontological) representations of engineering or operations content).

In a preferred embodiment, the predetermined metric comprises a semantic meaningful metric.

Preferably, the metric comprises semantics, wherein the similar preprocessed embeddings are semantically similar, or in other words close, to the embedding. Thus, the most suitable, most-similar embedding among the preprocessed embeddings in the embedding space can be found.

For example, two embeddings that are close to each other with respect to this semantically meaningful metric would mean that the underlying words/sentences/contents of these two embeddings have similar meanings.

Preferably, the term "near" or "close" relates to the metric, while the term "similar" relates to the semantic of the uncontrolled format data input.

In a preferred embodiment, a dimension of the embedding vector is larger than 10, preferably larger than 50, further preferably larger than 100. The larger the dimension of the embedding vector or embedding space, the more specific the abstract semantic representation of the to-be-represented concepts.

Each embedding dimension (and each embedding vector component value, respectively) can be considered as a feature/characteristic (or scale on this feature dimension, respectively), e.g., "how related is a concept to oil&gas industries vs. pharma&chem industries", "how related is a module functionality to separating vs. mixing some liquid material", etc. And accordingly, a value of 0.9 (on a normalized scale from -1 to +1) of the first component would then mean that the current concept strongly relates to oil&gas (as opposed to pharma/chem), and a value of -0.2 of the second component would stand for the concept's relation to rather mixing than separating. In addition, the value also can mean that there is no such clear differentiation here, meaning that maybe the concept's relation to separating/mixing is not so important for the concept's semantic meaning.

In reality these are more abstract features that are pre-trained or learned by the embedding model / NLP algorithm, optionally on either large amounts of text (on the internet or in Wikipedia) or on domain-specific document contents.

In a preferred embodiment, formalizing the controlled data format output using the embedding vector comprises mapping the embedding vector to the controlled data format output.

In other words, similar embedding vectors in the embedding space can be grouped together and mapped to one single controlled data format output. Thus, mapping the embedding vector to the controlled data format output preferably comprises identifying such a group of similar embedding vectors and mapping the embedding vector to the controlled data format output associated with this similar group of embedding vectors. In particular, one embedding vector of such a group of embedding vectors can have been identified and obtained from the preprocessed embeddings in the embedding space, whereby these preprocessed embeddings in the embedding space may already represent controlled/structured (e.g., ontological) representations of engineering or operations content).

Preferably, the mapping comprises an explicit mapping, which in particular is obtained from a pre-defined domain knowledge representation (e.g., in an ontological format) by a domain expert.

Preferably, the mapping comprises a learned mapping, which is learned in a supervised learning setting. For example, based on pairs of embeddings, it is learned which input (i.e. embedding) leads to a similar output so that the controlled data format output can be learned.

Preferably, the groups are sub-specified so that the target space of the controlled data format output is reduced and less wrong/inaccurate controlled data format output is determined.

In a preferred embodiment, the output processing algorithm comprises an output machine learning model that formalizes the controlled data format output.

Preferably, the output machine learning model comprises a decoder neural network.

Preferably, the output machine learning model is trained to formalize the controlled data format output using the embedding.

In a preferred embodiment, the input processing algorithm comprises an input machine learning model that determines the embedding.

Preferably, the input machine learning model comprises an encoder neural network.

Preferably, the input machine learning model is trained to determine the embedding of the obtained uncontrolled data format input in the embedding space.

Preferably, the input machine learning model is trained such that the embeddings of semantically similar input are close to each other in the embedding space.

Optionally, the input machine learning model uses few-shot learning, wherein a limited number of labelled data for a new classification is available to make predictions for new classifications. Further preferably, the input machine learning model uses zero-shot learning, wherein no labelled data for a new classification is available to make predictions for new classifications.

New uncontrolled data format input, like engineering or operations content, for example engineering intentions, are represented in the same latent embedding space near to similar previously processed representations. Thus, the new uncontrolled data format input will be accordingly recognized and classified.

In a preferred embodiment, the input machine learning model is based on a Large Language Model, LLM.

Preferably, the LLM is based on Natural Language Processing, NLP, techniques.

Thus, using NLP techniques, embeddings of the uncontrolled data format inputs, like engineering intentions, are learned and can be obtained.

Thus, the system is trained and can be used to yield ontological engineering intent representations based on natural language engineering intention inputs, and based on their abstract / latent semantic interim representations (i.e., the embeddings).

The trained models can be utilized in both directions, i.e., coming from the uncontrolled data format input, like natural language, and determining formalized controlled data format output, like ontological representations, and the other way around.

This for example comprises to approach the embedding from "the other side", and thus convert ontological representations of engineering or operations content like engineering intentions into natural language representations of these engineering or operations contents.

A use case for this would be to look at controlled data format information like data/documentation/structures built based on eBase format/tool: E.g., the process automation industry use eBase to process their customer data. However, eBase representations differ from user to user and from application to application, and customer data also differ and cannot be always simply reproduced even with the same tool. Thus, the trained machine learning model converts the (one or more) eBase representation(s) into a latent embedding space representation, and e.g. computes similarity scores in this latent embedding space (eventually followed by automated controlled output format-based engineering thereafter).

For example, the NLP techniques based LLM takes natural language input, like engineering intentions, process and transform it, and produces formalized controlled data format output, like ontological representations of engineering intentions.

In a further extension, the resulting formalized controlled data format output, for example ontological engineering intentions representations, could be checked for consistency with an underlying target ontological model, e.g., the underlying P&AE or eBase ontological models. These consistency checks could evaluate if the resulting formalized controlled data format output, e.g., ontological engineering intention representations, are available (as concepts or relations or instances) in the underlying P&AE or eBase ontological models, and if they are not available there, then this information can be used as feedback for the output machine learning model, e.g., by means of using standard penalty methods in mathematical optimization.

Further preferably, the formalization of the controlled data format output, for example ontological engineering intentions representations, could be punished using constitutional AI methods (i.e., e.g., through having another ML model to supervise the underlying core LLM in the sense of Scaled Supervised Learning) if parts of the ontological representations (e.g. concepts or relations or instances) are not available in the underlying P&AE or eBase ontological models.

Furthermore, the machine learning model (input and/or output) may comprise a pre-trained open-source LLM, such as SentenceBERT, or Dolly, for computation of the embeddings, etc. Alternatively, the machine learning model (input and/or output) may comprise an open-source instruction-tuned LLM, that can be fine-tuned (e.g., on input-output schema) to yield ontological engineering intention representations. Alternatively, the machine learning model (input and/or output) may be obtained by fine-tuning a pre-trained instruction-tuned LLM, whereby the fine-tuning can be done using P&A Engineering-domain specific engineering data, control narratives, P&IDs, eBase content, documentation, etc.

Using a pre-trained LLM-based system (pre-trained ML model and embeddings) achieves relatively good classification results (e.g., for intention topic modelling) already with only small/no overhead (i.e., fine-tuning using supervised ML and domain-specific P&AE intentions vocabulary).

Optionally, after determining the embedding, a principal component analysis is used to reduce the dimensionality of the embeddings and thus allow to plot them in fewer dimensions. Thereon-based, in an example, a user is provided with a first/preliminary (transparent/explainable) 2D visualization the system's output (i.e., the embedding-based mapping and formalization of his engineering intention) in order to then figure out whether his intention was correctly classified with similar intention formulations or into similar suitable intent clusters. Thus, if already here the engineer figures that his intention was wrongly processed or classified, he may reformulate it before the system goes further in the wrong direction.

Optionally, an entire engineering intention (e.g., a sentence) can be considered or only single words can be considered. E.g., single word embeddings may sometimes be easier matched with ontological concepts' embeddings/representations.

Thus, an improved way of formalizing an uncontrolled data format input is provided.

In a preferred embodiment, the input machine learning model and/or the output machine learning model comprises a neural network.

The neural network preferably comprises a transformer neural network, with an underlying encoder-decoder architecture and with one or more latent semantic representation layer(s), i.e. the embedding layer(s).

According to an aspect of the invention, a device for formalizing an uncontrolled data format input comprises the following. An input interface, configured to obtain an uncontrolled data format input. An input processing algorithm, configured to determine an embedding of the obtained uncontrolled data format input in an embedding space of a plurality of preprocessed embeddings, wherein the embedding is represented by an embedding vector, wherein the embedding vector comprises a plurality of vector entries specifying the embedding. An output processing algorithm, configured to formalize a controlled data format output using the embedding. An output interface, configured to output the controlled data format output.

The input processing algorithm and the output processing algorithm are preferably provided by a processing unit.

According to an aspect of the invention, a computer program comprises instructions, which, when the program is executed by a computer, cause the computer to carry out the steps of a method, as described herein.

According to an aspect of the invention, a computer-readable medium comprising instructions which, when executed by a computer, cause the computer to carry out the steps of a method, as described herein.

### Brief description of the drawings

Exemplary embodiments of the invention will be described in the following with reference to the accompanying drawings:
Fig. 1 illustrates a schematic view of a common workflow pipeline between a process engineer and an automation engineer;
Fig.2 illustrates a schematic general view of the main elements of an intent representation;
Fig. 3 schematically shows an exemplary instantiation of an intent representation;
Fig. 4 schematically shows exemplary steps of a formalization of an uncontrolled data format input into a formalized controlled data format output;
Fig. 5 schematically shows a transformer architecture for formalizing uncontrolled data format input;
Fig. 6 schematically shows a very low-dimensional (2D) embedding space with a plurality of embedding vectors (visualized as 2D points).

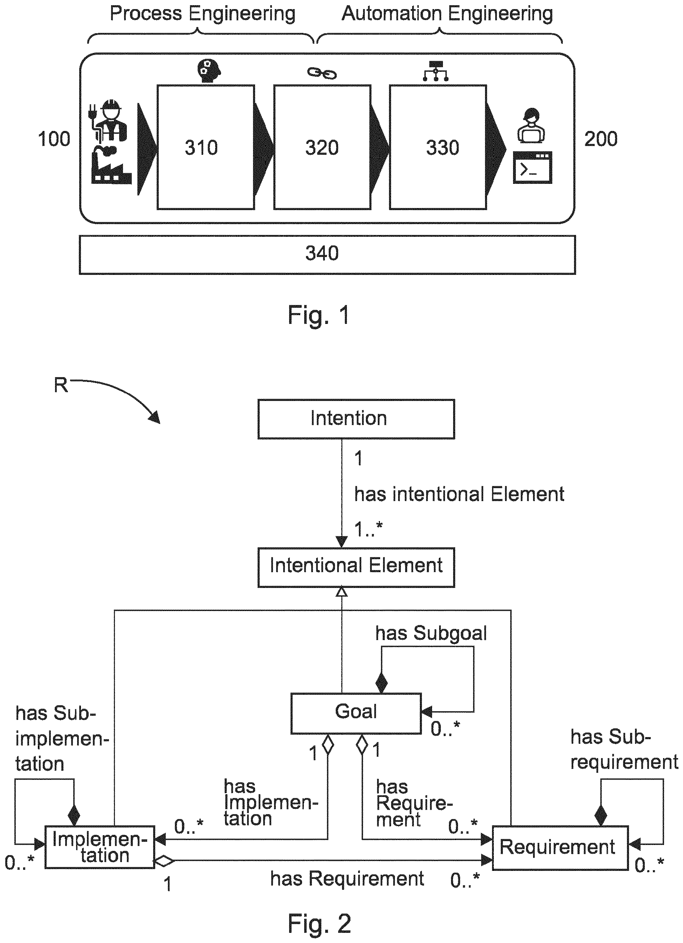

Fig. 1 illustrates a schematic view of a common workflow pipeline between a process engineer 100 and an automation engineer 200. The process engineer 100 determined engineering or operations content, like engineering intentions, during his workflow. This so called intent-based engineering 310 comprises for example intention modelling, intention formalization, abstract service & module representation and outputs specifications to serve as input for module pipeline generation 320. In a next step of the workflow pipeline, connecting the process engineering with the automation engineering, a module pipeline generation 320 is performed. This for example comprises generation of module pipelines, optimization & parameter turning as well as determining output specifications that describe plant topology to serve as input for an orchestration designer 330. In a next step of the workflow pipeline, an orchestration designer tool 330 is executed. This for example comprises further processing and manipulation of modules & plant topology (alarms, parametrization, etc) as well as providing functionality to create module instances and export everything to a target control system (e.g., 800xA or Freelance).

In order to perform the above-mentioned workflow pipeline, a semantic facilitation & integration layer 340 provides a common language, terminology & relationships, e.g., in the form of an underlying ontology, and thus may also comprise a common knowledge graph and common APIs, so that the workflow pipeline between the process engineer 100 and the automation engineer 200 can work without any inconsistencies and without losing any information.

This workflow pipeline however so far needs manual input of a knowing engineering domain expert 100 and an ontology expert for producing the ontological engineering intent representations in 310, which is still very error-prone.

Fig.2 illustrates a schematic general view of the main elements of an intent representation R. The intent representation R may contain information about the engineering intention, which is defined by properties and interrelations of an intentional element of the engineering intention, a goal of the engineering intention, a requirement of the engineering intention and an implementation of the engineering intention. Thus, the intent representation R is the basis for exchanging information about an engineering intention between the different stakeholders of the engineering workflow.

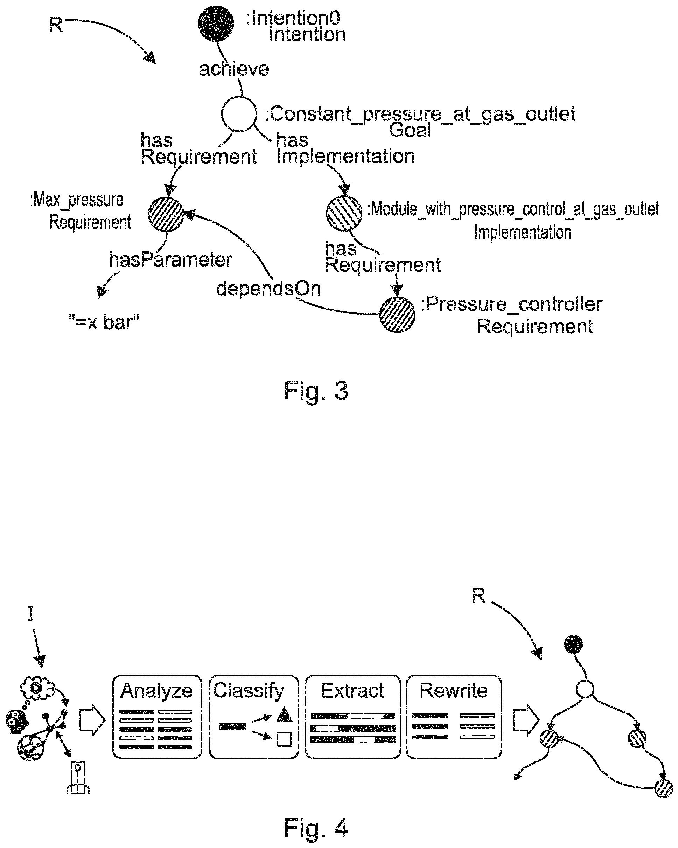

Fig. 3 schematically shows an exemplary instantiation of an intent representation R. Compared to the general view of the main elements of an intent representation R, Fig. 3 shows an exemplary instantiation of an engineering intention of a process engineer, who wants to maintain constant pressure at a gas outlet. The intent representation R shows how complex the engineering intention of the process engineer gets by showing the interrelations and dependencies between the goal, comprising for example subgoals, the different necessary implementations and the different requirements.

Fig. 4 schematically shows exemplary steps of a process of a formalization of an uncontrolled data format input into a formalized controlled data format output. The uncontrolled data format input in this case comprises an engineering or operations content in form of an engineering intent in natural language. This could for example be: "I want to build an oil-gas-water-separator" or "I want to maintain pressure".

In general, a new process is provided that automatically processes the uncontrolled data format input and formalizes it into controlled data format output, in this case an intent representation R, that can be used by all stakeholders of the workflow pipeline shown in Fig. 1. In other words, the uncontrolled data format input is analysed, and the content of the uncontrolled data format input is classified. Then the engineering intention is extracted, and the content of the uncontrolled data format input is rewritten in order to determine the intent representation R.

Thus, several NLP-model functionalities are merged into one further-advanced process for engineering intention recognition, classification & formalization. This should allow to automatically understand the engineering intention, classify the engineering intention and formalize the engineering intention, i.e., e.g., translate the engineering intention into an ontological representation.

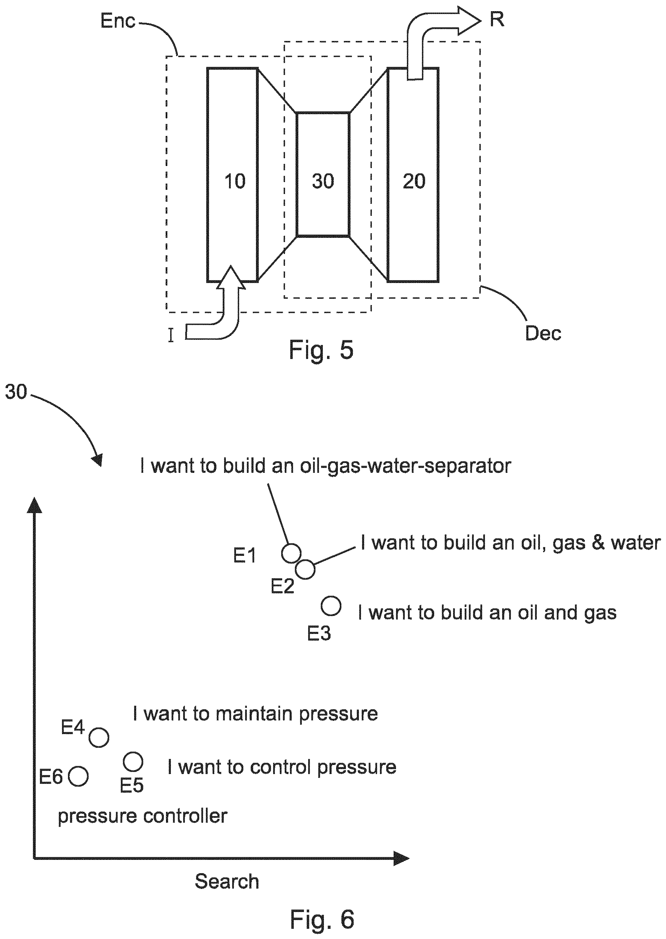

Fig. 5 schematically shows a transformer architecture for formalizing uncontrolled data format input. The transformer architecture comprises an input interface that is configured to obtain an uncontrolled data format input, in this case comprising engineering or operations content in form of engineering intention I. An input processing algorithm, carried out by a processing unit, provides an encoder Enc that determines an embedding E of the obtained uncontrolled data format input I in an embedding space 30 resulting from a plurality of preprocessed embeddings, wherein the embedding E is represented by an embedding vector, wherein the embedding vector comprises a plurality of vector entries specifying the embedding E. An output processing algorithm, carried out by the processing unit, provides a decoder Dec that formalizes a controlled data format output using the embedding. The encoder Enc is provided by using an input machine learning model 10, for example comprising a Large Language Model, to determine the embedding vector from the uncontrolled data format input. The decoder Dec is provided by using an output machine learning model 20 to map the embedding vector of the uncontrolled data format input to a respective controlled data format output, like an ontological representation R of the engineering intention I.

Fig. 6 schematically shows a very low-dimensional (2D) embedding space 30 with a plurality of embeddings E in form of embedding vectors (visualized as 2D points).

In this case, the embeddings space 30 contains six embedding vectors E1-E6. The first embedding E1 is a representation of the uncontrolled data format input with the engineering intention "I want to build an oil-gas-water-separator". The second embedding E2 is a representation of the uncontrolled data format input with the engineering intention "I want to separate oil, gas & water". The third embedding E3 is a representation of the uncontrolled data format input with the engineering intention "I want to separate oil and gas". The fourth embedding E4 is a representation of the uncontrolled data format input with the engineering intention "I want to maintain pressure". The fifth embedding E5 is a representation of the uncontrolled data format input with the engineering intention "I want to control pressure". The sixth embedding E6 is a representation of the uncontrolled data format input with the engineering intention "pressure controller".

Based on the values of the different entries of the respective embedding vectors, the first to third embeddings E1-E3 are similar to each other in their semantic meanings and are therefore located close to each other in the embedding space. This group of the first to third embeddings E1-E3 could be classified together (as "has to do with the intention of separating oil, gas and water") and can be mapped to similar controlled data format outputs, in particular an ontological engineering intent representation. In the same manner, the fourth to sixth embeddings E4-E6 are similar to each other in their semantic meanings and are therefore also located close to each other in the embedding space. This group of the fourth to sixth embeddings E4-E6 could be classified together (as "has to do with the concept of a pressure controller") and when further processing in the above described process they could be transformed into similar controlled data format output, in particular again an ontological engineering intent representation.

Consequently, the determination of the embedding in form of an embedding vector in the embedding space, allows to automatically formalize a controlled data format output using the embeddings based on an uncontrolled data format input.

## Claims

1. A computer-implemented method for formalizing an uncontrolled data format input, comprising the steps:
obtaining (S10), by an input interface, an uncontrolled data format input;
determining (S20), by an input processing algorithm, an embedding (E) of the obtained uncontrolled data format input in an embedding space (30) resulting from a plurality of preprocessed embeddings, wherein the embedding (E) is represented by an embedding vector, wherein the embedding vector comprises a plurality of vector entries specifying the embedding (E);
formalizing (S30), by an output processing algorithm, a controlled data format output using the embedding (E);
outputting (S40), by an output interface, the controlled data format output.

2. The method of claim 1,
wherein the uncontrolled data format input comprises engineering or operations content.

3. The method of claim 2,
wherein determining, by the input processing algorithm, the embedding (E) of the obtained uncontrolled data format input comprises:
identifying the engineering or operations content in the uncontrolled data format input;
determining the embedding (E) based on the identified engineering or operations content.

4. The method of any one of the preceding claims,
wherein the uncontrolled data format input comprises a natural language input or an uncontrolled text input.

5. The method of any one of the preceding claims,
wherein determining, by the input processing algorithm, the embedding (E) of the obtained uncontrolled data format input comprises:
identifying preprocessed embeddings in the embedding space (30), which are similar to the embedding (E) with respect to a predetermined metric;
determining the embedding (E) based on the similar preprocessed embeddings.

6. The method of claim 5,
wherein the predetermined metric comprises a semantically meaningful metric.

7. The method of any one of the preceding claims,
wherein a dimension of the embedding vector is larger than 10, preferably larger than 50, further preferably larger than 100.

8. The method of any one of the preceding claims,
wherein formalizing the controlled data format output using the embedding vector comprises:
mapping the embedding vector to the controlled data format output.

9. The method of any one of the preceding claims,
wherein the output processing algorithm comprises an output machine learning model (30) that formalizes the controlled data format output.

10. The method of any one of the preceding claims,
wherein the input processing algorithm comprises an input machine learning model (10) that determines the embedding (E).

11. The method of claim 10,
wherein the input machine learning model (10) is based on a Large Language Model.

12. The method of any one of the claims 9 to 11,
wherein the input machine learning model (10) and/or the output machine learning model (30) comprises a neural network.

13. A device for formalizing an uncontrolled data format input, comprising:
an input interface, configured to obtain an uncontrolled data format input;
an input processing algorithm, configured to determine an embedding (E) of the obtained uncontrolled data format input in an embedding space (30) of a plurality of preprocessed embeddings, wherein the embedding (E) is represented by an embedding vector, wherein the embedding vector comprises a plurality of vector entries specifying the embedding (E);
an output processing algorithm, configured to formalize a controlled data format output using the embedding (E);
an output interface, configured to output the controlled data format output.

14. A computer program comprising instructions, which, when the program is executed by a computer, cause the computer to carry out the steps of a method according to any of claims 1-12.

15. A computer-readable medium comprising instructions which, when executed by a computer, cause the computer to carry out the steps of a method according to claim 14.
